# EUROPEAN PATENT APPLICATION

(11) **EP 4 629 362 A1**
(43) Date of publication of application: **08.10.2025**
(21) Application number: 24204618.3
(22) Date of filing: 04.10.2024
(51) Int. Cl.: H01M 10/04, H01M 10/0525, H01M 10/0583, H01M 50/466, H01M 4/70

(54) **THERMAL COMPOSITE LAMINATED CELL**

(30) Priority: 03.04.2024 CN 202420685535 U
(71) Applicant: Eve Power Co., Ltd., Jingmen, Hubei 448000 (CN)
(72) Inventor: CHEN, Liquan, Guangdong, 516039 (CN); LI, Weibo, Guangdong, 516039 (CN); CHEN, Wei, Guangdong, 516039 (CN); HE, Wei, Guangdong, 516039 (CN); LIU, Jincheng, Guangdong, 516039 (CN); YUAN, Dingding, Guangdong, 516039 (CN); SU, Bin, Guangdong, 516039 (CN)
(74) Representative: Murgitroyd & Company

(57) **Abstract**

Disclosed herein is a thermal composite laminated cell comprising a negative electrode (100), a plurality of positive electrodes (200), and a separator (300), the separator (300) comprising a first separator (310) and a second separator (320), the negative electrode (100) being attached to and between the first separator (310) and the second separator (320) to form a composite laminate, the composite laminate comprising a plurality of body portions (330) and a plurality of bending portions (340) arranged alternately and continuously, the bending portions (340) each being provided with a partially cut structure (350), the positive electrodes (200) each being arranged between adjacent body portions (330) in a thickness direction of the negative electrode (100), a projection in the thickness direction of each positive electrode (200) falling completely within a planar area of the body portions (330). The present application overcomes the problem of poor alignment of the existing composite laminated cell, and has the advantages of good alignment and stable performance.

## Description

### TECHNICAL FIELD

This application relates to the field of battery technology, and in particular relates to a thermal composite laminated cell.

### BACKGROUND

Currently, battery cells are mainly manufactured by folding or winding processes. Laminated battery cells (laminated cells for brevity) are widely used due to their numerous advantages. Electrodes of the laminated cells are in free fall during the folding processes, resulting in misalignment between the negative and positive electrodes and therefore the poorly aligned laminated cells. In the charging process of batteries, lithium ions are deintercalated from the positive electrodes and intercalated into the negative electrodes. But in the cases where the positive and negative electrodes are misaligned, the lithium ions cannot be completely intercalated into the negative electrodes, and the lithium ions that cannot be intercalated into the negative electrodes have to combine with electrons on the surfaces of the negative electrodes to form white metallic lithium, that is lithium plating. The presence of lithium plating in a battery greatly shortens the cycle life of the battery, limits fast charging capacity of the battery, and may cause combustion explosion and the like, thereby causing potential safety risks and degrading the performance of the battery.

In the related art, in order to improve the alignment of the laminated cells, the laminated cells production processes should incorporate additional shaping processes, which, after cells are formed through folding thermal composite units in free fall, use shaping cylinders to clamp the cell(s) from opposite sides thereof, to align the electrodes in the cell(s). There is still a problem of poor alignment of the cells shaped by means of the shaping cylinders, and the electrodes might drop powers when being knocked during the shaping processes of the cylinders, thereby increasing the risk of short-circuit of the battery cell(s)/pack(s).

### SUMMARY

The embodiments of the present application provide a laminated cell, in which partially cut structures are provided on the bending portions of the separator and the negative electrode, and the separator is folded along the partially cut structures, thereby achieving the technical effects of good folding quality, high folding efficiency, and good alignment.

An embodiment of the present application provides a thermal composite laminated cell comprising:
a negative electrode;
a plurality of positive electrodes;
a separator comprising a first separator and a second separator, the negative electrode being attached to and between the first separator and the second separator to form a composite laminate, the composite laminate comprising a plurality of body portions and a plurality of bending positions arranged alternately and continuously, the bending positions each being provided with a partially cut structure, the positive electrodes each being arranged between adjacent body portions in a thickness direction of the negative electrode, a projection in the thickness direction of each positive electrode falling completely within a planar area of a corresponding one of the body portions.

Optionally, a length of the negative electrode is at least greater than a length of two of the positive electrodes.

Optionally, the negative electrode comprises a continuous negative current collector and a continuous negative active material layer, the negative active material layer being provided on both sides of the negative current collector, and one side of the negative active material layer facing away from the negative current collector is attached to the separator.

Optionally, the negative electrode comprises a continuous negative current collector and two negative active material layers, both sides of the negative current collector being provided with the negative active material layers, a projection of each of the negative active material layers in the thickness direction falling entirely within the planar area of a corresponding one of the body portions.

Optionally, the negative current collector between adjacent negative active material layers is attached to the first separator and the second separator.

Optionally, distances between adjacent negative active material layers are the same in the composite laminate.

Optionally, throughout the composite laminate, a distance between adjacent negative active material layers is L, where 1mm≤L≤3mm.

Optionally, a thickness of the negative current collector is D1, where 4µm≤D1≤6µm.

Optionally, a thickness of each negative active material layer is D2, where 50µm≤D2≤200µm.

Optionally, each of the partially cut structures comprises a plurality of through-holes passing through the separator and the negative electrode, the through-holes being arranged at intervals along a width direction of the separator.

Optionally, distances between any two adjacent through-holes are the same.

Optionally, each of the through-holes has a shape of circle, rectangle, ellipse, hexagon or octagon.

Optionally, the distance between adjacent through-holes in the width direction of the separator is S1, wherein 5mm≤S1≤20mm.

Optionally, each of the through-holes has a first dimension L1 and a second dimension W1, the first dimension being a distance between two parallel planes virtually abutting against two side walls of the through-hole and the second dimension being a distance between two parallel planes virtually abutting against two end walls of the through-hole, wherein 1mm≤L1≤20mm, and/or 1mm≤W1≤2mm.

Optionally, a length dimension of a portion of the negative electrode on each body portion is larger than a length dimension of a corresponding one of the positive electrodes, and a width dimension of the portion of the negative electrode on the body portion is larger than a width dimension of the corresponding positive electrode.

Optionally, a distance between a long side of each positive electrode and a long side of a portion of the negative electrode on a corresponding one of the body portions is S2, where 1mm≤S2≤3mm;
and/or, a distance between a short side of the positive electrode and the corresponding wide side of the portion of the negative active material layer on the corresponding body portion is S3, where 1mm≤S3≤3mm.

Optionally, a length dimension of the separator is larger than a length dimension of the negative electrode and a width dimension of the separator is larger than a width dimension of the negative electrode.

Optionally, a distance between a long side of the negative electrode and a long side of the separator is S4, where 2mm≤S4≤4mm; and/or
a distance between a start or finish end of the negative electrode and a start or finish end of the separator is S5, where 1mm≤S5≤3mm.

The embodiments of the present application provide a thermal composite laminated cell comprising a continuous negative electrode, a plurality of positive electrodes, and a separator, the separator comprising a first separator and a second separator, the negative electrode being attached to and between the first separator and the second separator to form a composite laminate. The negative electrode needs not to be cut, and therefore the manufacture processes are reduced, processing efficiency is improved. The composite laminate is bent to form a plurality of body portions and bending portions, the bending portions are provided with partially cut structures, the positive electrodes is each arranged between adjacent body portions in a thickness direction of the negative electrode, the positive electrode and the body portions are arranged in opposite positions. The first separator, the second separator, and the negative electrode of the composite laminate are folded along straight lines where the partially cut structures are located, and the negative electrode is of a continuous structure, so that structural strength of the composite laminate at positions of the partially cut structures is increased, and the separator is prevented from being pulled apart. Besides, the composite laminate can be folded at same positions each time, so that the alignment of the positive electrodes is ensured, the alignment of the laminated cell is good, the occurrence of lithium plating is reduced, and the electrical performances of the laminated cell in terms of cycle life, quick charging capacity, safety, and the like have been improved.

### BRIEF DESCRIPTION OF THE DRAWINGS

In order that the technical solution in the embodiments of the present application may be explained more clearly, a brief description will be given below of the drawings required for use in the description of the embodiments. Obviously, the drawings in the following description are merely some of the embodiments of the present application, and other drawings can be made from these drawings without involving any inventive effort to those skilled in the art.

For a more complete understanding of the present application and its advantages, reference will now be made to the accompanying drawings. In the following description, same reference numerals refer to same parts.
FIG. 1 is a top view of a thermal composite laminated cell according to an embodiment of the present application.
FIG. 2 is a cross-sectional view along the line A-A in FIG. 1, showing the thermal composite laminated cell of a first form.
FIG. 3 is a cross-sectional view along the line A-A in FIG. 1, showing the thermal composite laminated cell of a second form.
FIG. 4 is a partially enlarged view of the region B in FIG. 3
FIG. 5 is a schematic diagram showing a composite laminate of the thermal composite laminated cell of the first form according to an embodiment of the present application.
FIG. 6 is a schematic diagram showing a composite laminate of the thermal composite laminated cell of the second form according to an embodiment of the present application.
FIG. 7 is an annotated diagram of the thermal composite laminated cell according to an embodiment of the present application.

### DETAILED DESCRIPTION

The technical solution in the embodiments of the present invention will be clearly and completely described with reference to the accompanying drawings. It will be apparent that the described embodiments are only part of the embodiments of the present application, and not all embodiments. Based on the embodiments in the present application, all other embodiments obtained by a person skilled in the art without involving any inventive effort are within the scope of the present application.

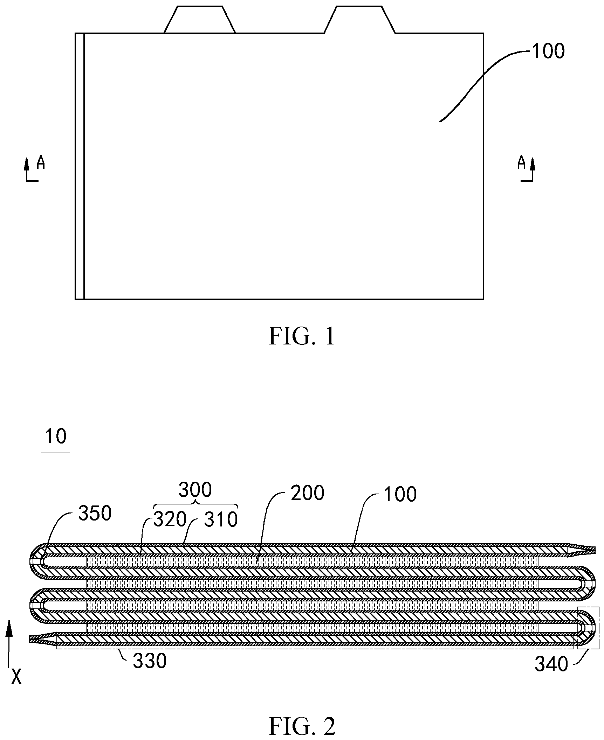

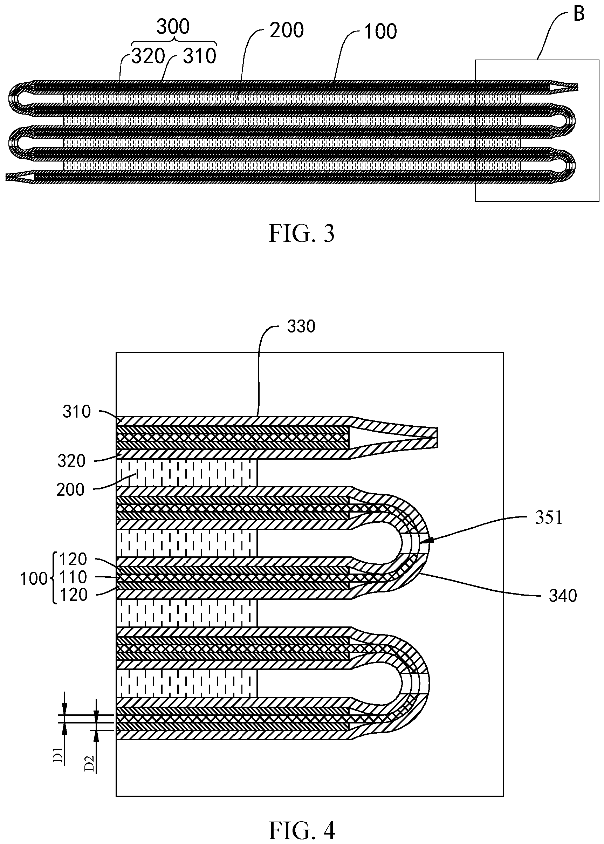

Referring to FIGS. 1, 2 and 3, FIG. 1 is a top view of a composite laminated cell according to an embodiment of the present application, FIG. 2 is a cross-sectional view along the line A-A in FIG. 1 showing the composite laminated cell of the first form, and FIG. 3 is a cross-sectional view along the line A-A in FIG. 1 showing the composite laminated cell of the second form. An embodiment of the present application provides a thermal composite laminated cell 10 that can be used as an energy storage unit in a battery that can convert energy stored within the cell into a current for use by an electronic device. The thermal composite laminated cell 10 includes a continuous negative electrode 100, a plurality of positive electrodes 200, and a separator 300.

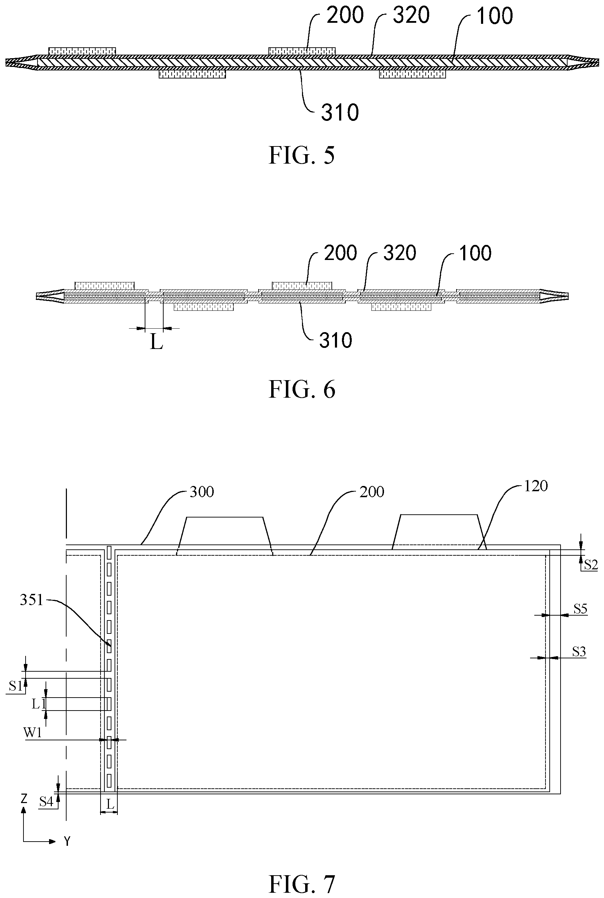

In the present embodiment, as shown in FIGS. 5 and 6, before folding, the negative electrode 100 is in the shape of a continuous strip, and a plurality of negative tabs are formed on the negative electrode 100; the positive electrodes 200 are formed by cutting a positive electrode material roll, each positive electrode 200 is rectangular in shape, and the positive tabs are formed on the positive electrodes 200.

In the present embodiment, as shown in FIGS. 2 and 3, the separator 300 includes a first separator 310 and a second separator 320. Before folding, the first separator 310 and the second separator 320 are both continuous strip-like structures. The first separator 310 and the second separator 320 have the same dimensions and shape. The shape of the negative electrode 100 is the same as that of the first separator 310 and the second separator 320. The first separator 310 and the second separator 320 have dimensions larger than those of the negative electrode 100. The negative electrode 100 is disposed between the first separator 310 and the second separator 320. The first separator 310, the negative electrode 100, and the second separator 320 are stacked. The negative electrode 100 is laminated with the first separator 310 and the second separator 320 to form a composite laminate. The composite laminate is folded into a zigzag shape to form a plurality of body portions 330 and a plurality of bending portions 340. The bending position 340 is connected to adjacent body portions 330, and the bending position 340 is provided with a partially cut structure 350. The positive electrodes 200 and the body portions 330 are arranged to alternate with each other in the thickness direction X. The positive electrodes 200 are each arranged between adjacent body portions 330, and the projection of the positive electrode 200 in the thickness direction falls completely within the planar area of each of the body portions 330. The planar area of the body portion 330 is a continuous planar region surrounded by the outer contour of the projection of the body portion 330 in the thickness direction of the positive electrode 200. The material of the separator 300 may be polypropylene, polyethylene, polyethylene terephthalate, polybutylene terephthalate, ethylenepropylene copolymer, cellulose, or the like.

It will be appreciated that, as shown in FIGS. 5 and 6, before folding of the composite laminate, the first separator 310, the negative electrode 100 and the second separator 320 are thermally laminated to form a laminated structure, where the first separator 310 and the second separator 320 completely enclose the negative electrode 100 to ensure the electrical performance of the negative electrode 100. The positive electrodes 200 are then alternately thermally laminated to the first separator 310 and the second separator 320, and the partially cut structures 350 are formed on the composite laminate with the partially cut structures 350 each being located on one side of a positive electrode 200. In this embodiment, the negative electrode 100 needs not to be cut, and the manufacture processes of the thermal composite laminated cell 10 are reduced, thereby improving the production efficiency of the thermal composite laminated cell 10. In addition, the partially cut structures 350 allows the composite laminate to be folded at same positions each time, thereby facilitating the alignment of the thermal composite laminated cell 10. The electrical performance of the thermal composite laminated cell 10 is ensured, and no subsequent alignment equipment is needed, thereby reducing equipment investment, processing procedures, and production costs of the thermal composite laminated cell 10.

The negative electrode 100 and the positive electrodes 200 are thermally laminated on the separator 300, meaning that the negative electrode 100 and the positive electrodes 200 are fixed on the surface of the separator 300 by a thermal lamination process. Illustratively, the thermal lamination process is as follows: a positive electrode material roll, a negative electrode material roll, and a separator are simultaneously fed; before entering the heating device, the positive sheets are formed by cutting the positive electrode material roll with a cutting knife into separate sheets of desired dimensions; the combination of the negative electrodes 100, the positive electrode 200 and the separator 300 enters the heating system under the action of rollers, where the separator is a glue-coated separator and is adhesive after being heated; the positive electrodes 200 and the negative sheet 100, after being baked, are thermally laminated with the separator 300, and are subsequently rolled and cut to form the composite laminate.

In some embodiments, the negative electrode 100 includes a continuous negative current collector 110 and a continuous negative active material layer 120 disposed on both sides of the negative current collector 110, one side of the negative active material layer 120 facing away from the negative current collector 110 being adhered to the separator 300 on the side, that is, the first separator 310 is adhered to the negative active material layer 120 on the side where it is located, and the second separator 320 is adhered to the negative active material layer 120 on the side where it is located. The negative current collector 110 may be made of copper and the negative active material layer 120 may be made of graphite.

In some embodiments, referring to FIGS. 3, 4, and 6, the negative electrode 100 includes a continuous negative electrode collector 110 and a plurality of negative active layers 120, where the negative electrode collector 110 is in the form of a continuous strip, both sides of the negative electrode collector 110 are provided with a plurality of the negative active material layers 120, the plurality of negative active layers 120 on one side of the negative electrode collector 110 are provided at intervals, the negative active material layers 120 are adhered to the first separator 310 and the second separator 320 on the side on which the negative active material layers 120 are located, the projections of the negative active material layers 120 on both sides of the negative electrode collector 110 overlap on the negative electrode collector 110, and the projections of the negative active material layers 120 in the thickness direction completely fall within the planar area of the body portions 330.

In the present embodiment, the negative electrode 100 can be laser-etched off the negative electrode active material in partial areas, to form the negative active material layers 120 at intervals, this may prevent the powders from dropping from the etched areas during the folding of the composite laminate, thereby reducing the risk of short circuit of the cell/pack and improving the performance of the thermal composite laminated cell 10.

On the basis of the above-described embodiments, both sides of the negative current collector 110 between the adjacent negative active material layers 120 are respectively attached to the first separator 310 and the second separator 320 on the side on which the negative current collector 110 is located. It will be appreciated that in the present embodiment, the bare negative current collector 110 is attached to the separator 300, and the separator 300 is firmly connected to the negative electrode 100, thereby reducing the probability that the separator is separated from the bare negative current collector 110, and improving the reliability of the battery cell.

In some embodiments, the distances between adjacent negative active layers 120 are the same in the composite laminate.

It will be appreciated that the plurality of negative active material layers 120 are formed by etching the negative electrode active material so that the distances between the negative active material layers 120 are the same, this facilitates the processing. In addition, the areas between adjacent negative active material layers 120 correspond to the bending portions 340 after folding, this ensures alignment of the thermal composite laminated cell 10.

In some embodiments, referring to FIG. 7, in the composite laminate, the distance between adjacent negative active material layers 120 is L, where 1mm≤L ≤3mm. The value of L may be 1 mm, 1.3mm, 1.8mm, 2.5 mm, 2.7mm, 3 mm or other values not listed.

In the present embodiment, the distance between the adjacent negative active material layers 120 is reasonably designed to avoid excessive negative electrode active material in the areas of the bending portions 340, which causes powders dropping in the folding process, and to prevent the negative electrode active material in the region of the body portions 330 from being too small to cover the positive electrodes 200, thereby ensuring the performance of the thermal composite laminated cell 10.

In some embodiments, referring to FIG. 4, the negative electrode collector 110 has a thickness of D1, where 4 µ m≤D1 ≤6 µm. The value of D1 may be 4 µm, 4.3 µ m, 5 µm, 5.2 µ m, 6 µ m, or other values not specified. The thickness of the negative current collector 110 is reasonably designed to meet the electrical requirements of the negative electrode 100.

In some embodiments, as shown in FIG. 4, the thickness of the negative active material layers 120 is D2, 50 µ m≤D2 ≤200 µ m. The value of D2 may be 50 µm, 65 µ m, 74 µ m, 81 µm, 98 µ m, 105 µ m, 111 µm, 127 µ m, 133 µ m, 147 µ m, 155 µ m, 164 µ m, 178 µ m, 183 µ m, 196 µ m, 200 µm, or other values not listed. The thickness of the negative active material layers 120 is reasonably designed to meet the electrical requirements of the negative electrode 100.

In some embodiments, referring to FIGS. 2, 3, and 7, the partially cut structures 350 each include a plurality of through-holes 351 passing through the separator 300 and the negative electrode 100, the plurality of through-holes 351 being spaced apart in the width direction Z of the separator 300.

As can be appreciated, in the present embodiment, the partially cut structures 350 are formed by forming the through-holes 351 in the composite laminate passing through the first separator 310, the second separator 320, and the negative electrode 100. And the material at the local positions on the first separator 310, the second separator 320, and the negative electrode 100 are cut away, and the first separator 310, the second separator 320, and the negative electrode 100 are not completely cut in the width direction Z of the composite laminate. Therefore, no misalignment of the separator 300 and the negative electrode 100 occurs as compared with the cases where they are completely cut. Besides, the portions of the separator 300 at the peripheries of the through-holes 351 are weak, and when the composite laminate is folded in free fall, the separator 300 and the negative electrode 100 are folded along the positions of the through-holes 351, so as to be folded at the accurate positions, thereby facilitating the alignment of the negative electrode 100 and the positive electrodes 200 in the thermal composite laminated cell 10.

Alternatively, the plurality of through-holes 351 are arranged in an array, as a plurality of rows of through-holes 351 arranged in the longitudinal direction Y of the separator 300. Each row of through-holes 351 may be arranged along the width direction Z of the separator 300. Illustratively, the arrangement directions of the plurality of rows of through-holes 351 may be parallel to each other. In other embodiments, there may be an included angle between the arrangement direction of at least one row of through-holes 351 and the arrangement direction of the other row(s) of through-holes. Illustratively, the included angle may be less than or equal to 10° , e.g., 1 ° ,2° , 5° . In other embodiments, the included angle may also be greater than 10° . The embodiments of the present application are not limited thereto. Illustratively, a plurality of through-holes 351 of one row of any two rows of through-holes 351 and a plurality of through-holes 351 of the other row may be disposed opposite each other in a one-to-one correspondence. In other embodiments, there may be at least one row whose through-holes 351 alternate with the through-holes 351 of another row The "alternate with" here means that the projections of two through-holes 351 in the longitudinal direction Y of the separator 300 does not coincide. For example, the plurality of through-holes 351 of one row of two adjacent rows of through-holes 351 may alternate with the plurality of through-holes 351 of the other row.

In other embodiments, the partially cut structure 350 may also include a plurality of gaps spaced from one another. The gaps may be formed by cutting the separator with a cutter or the like. The partially cut structure 350 may also be a reticulated structure.

In other embodiments, the partially cut structure 350 includes a plurality of through-holes 351 that only pass through the separator 300, the plurality of through-holes 351 being spaced apart in the width direction Z of the separator 300. It is also possible to release the folding stress at the positions of the bending portions 340 so that the composite laminate is easily folded at the partially cut structures 350, thereby limiting the folding positions, improving the folding quality and folding efficiency.

In some embodiments, the distance between adjacent through-holes 351 is the same. The distance between the adjacent through-holes 351 refers to the distance between one side edge of one of the through-holes 351 and one side edge of the adjacent one of the through-holes 351 in the width direction Z of the separator 300. It is advantageous to form the through-holes 351ed in both the separator 300 and the negative electrode 100, so that the strengths of the separator 300 and the negative electrode 100 on the straight line in which the plurality of through-holes 351 are located are the same, so as to prevent the separator 300 and the negative electrode 100 from being pulled apart during the folding process due to weak local strengths.

In some embodiments, as shown in FIG. 7, the through-holes 351 each have a circular, rectangular, or irregular shape. The through-holes 351 may each have a regular shape such as an ellipse, a hexagon, or an octagon, in addition to a shape such as a circle or a rectangle.

In some embodiments, the distance between adjacent through-holes 351 in the width direction Z of the separator 300 is S1, where 5mm≤S1≤20mm. The value of S1 may be 5.0mm, 5.2mm, 5.7mm, 7.8mm, 9.0mm, 10.5mm, 11.5mm, 12.3mm, 13.9mm, 14.0mm, 15.7mm, 16.1mm, 17.4mm, 18.0mm, 19.6mm, 20.0mm, or other values not listed.

It can be understood that the distance between the through-holes 351 in the present embodiment is reasonably designed, so as to avoid a case in which the distance between the through-holes 351 is too small, the number of the through-holes 351 is too large, and the structural strength of the separator 300 is affected, and also avoid a case in which the distance between the through-holes 351 is too large, the number of the through-holes 351 is relatively small, and the folding cannot be performed at predetermined positions.

In some embodiments, the through-holes 351 each has a first dimension L1 and a second dimension W1, the first dimension being a distance between two parallel planes which virtually abuts the two side walls of the through-hole 351 and the second dimension being a distance between two parallel planes which virtually abuts the two end walls of the through-hole 351, where 1mm≤L1≤20mm, and/or 1mm≤ W1≤2mm. The two side walls refer to the side walls extending in the width direction Z of the separator 300, and the two end walls refer to the side walls extending in the length direction Y of the separator 300. The value of L1 in this embodiment may be 1.1mm, 1.2 mm, 1.5 mm, 2.3mm, 3.4mm, 4.2mm, 5.0mm, 6.8mm, 7.8mm, 8.8mm, 9.0mm, 10.3mm, 11.1mm, 12.5mm, 13.8mm, 14.1mm, 15.0mm, 16.6mm, 17.7mm, 18.2mm, 19.1mm, 20.0mm, or other values not specified. The value of W1 in this embodiment may be 1.1mm, 1.2 mm, 1.4mm, 1.5 mm, 1.8mm, 2.0 mm, or other values not specified.

It should be noted that the two parallel planes virtual abutting the through-hole 351 are introduced only for the convenience of understanding the first dimension and the second dimension, and are not actually present in the solution of the present application. For example, the through-hole 351 has a rectangular outer profile, and in order to determine the first dimension and the second dimension, it is assumed that there are two sets of planes, each set of planes including two parallel planes spaced apart, the two parallel planes of each set being capable of simultaneously virtually abutting the two opposing hole walls of the through-hole 351, then there is a distance between the two parallel planes of each set, the first dimension being the distance between the two planes abutting the two side walls of the through-hole 351, and the second dimension being the distance between the two planes abutting the two end walls of the through-hole 351.

It will be appreciated that the dimensions of the through-holes 351 in the present embodiment are reasonably designed to prevent the length and width of each through-hole 351 from being excessively long or excessively short, and to prevent the structure strength of the separator 300 and the negative electrode 100 from being affected by the dimensions of excessively large through-holes 351 , and to avoid the cases where the dimensions of the through-holes 351 are excessively small, and the through-holes 351 cannot function as the folding positions during the folding process.

In some embodiments, referring to FIGS. 4 and 7, the length dimension of the portions of the negative electrode 100 on the body portions 330 is greater than the length dimension of the corresponding positive electrodes 200, and the width dimension of the portions of the negative electrode 100 on the body portions 330 is greater than the width dimension of the corresponding positive electrodes 200.

It will be appreciated that in the thickness direction X of the thermal composite laminated cell 10, the projection of each positive electrode 200 on the corresponding body portion 330 falls completely into the corresponding portion of the negative electrode 100, and when the negative electrode 100 includes a plurality of spaced negative active material layers 120, the projections of the positive electrodes 200 on the body portions 330 fall completely into the negative active material layers 120. The dimensions of the negative electrode 100 are designed to be larger than the dimensions of the positive electrodes 200. During the charging process of the lithium battery, the negative electrode 100 can completely receive lithium ions from the positive electrodes 200 without forming lithium dendrites, thereby preventing the cases where the formed lithium dendrites penetrate the separator 300 to cause the short-circuit and induce a thermal runaway, thereby improving the reliability of the battery.

In some embodiments, as shown in FIG. 7, the distance between the long side of each positive electrode 200 and the long side of the portion of the negative electrode 100 on the corresponding body portion 330 is S2, where 1mm≤S2≤3mm, and/or the distance between the wide side of each positive electrode 200 and the wide side of the portion of the negative active material layer 120 on the corresponding body portion 330 is S3, where 1mm≤S3≤3mm. Where S2 and S3 may have values of 1 mm, 1.3mm, 2 mm, 2.7mm, 3 mm or other values not specified.

It will be appreciated that when the negative electrode 100 includes a continuous negative current collector 110 and a plurality of negative active material layers 120, the distance between the long side of each positive electrode 200 and the long side of the corresponding negative active material layer 120 is S2, and the distance between the wide side of each positive electrode 200 and the wide side of the corresponding negative active material layer 120 on the corresponding body portion 330 is S3.

In this embodiment, the distance S2 between the long side of the positive electrodes 200 and the long side of the negative electrode 100 and the distance S3 between the wide side of the positive electrodes 200 and the wide side of the negative electrode 100 are reasonably designed, so that the material waste (which increases the cost) caused by oversize is avoided while the battery safety performance is satisfied.

In some embodiments, the length dimension of the separator 300 is greater than the length dimension of the negative electrode 100, and the width dimension of the separator 300 is greater than the width dimension of the negative electrode 100.

It will be appreciated that the length dimension of the separator 300 is greater than the length dimension of the continuous negative electrode 100, and the width dimension of the separator 300 is greater than the width dimension of the continuous negative electrode 100. The negative electrode 100 and the positive electrodes 200 are separated by the separator 300. If the dimension of the separator 300 is smaller than the dimension of the negative electrode 100, the negative electrode 100 and some positive electrode(s) 200 may be in direct contact, which will cause thermal runaway due to the short circuit. The dimensions of the separator 300 is designed to be larger than the dimensions of the positive electrodes 200, thereby meeting the electrical safety requirements of the thermal composite laminated cell 10, and improving the reliability of the thermal composite laminated cell 10.

In some embodiments, as shown in FIG. 7, the distance between the long side of the negative electrode 100 and the side of the separator 300 is S4, where 2mm ≤S4 ≤ 4mm, and/or the distance between the start or finish end of the negative electrode 100 and the start or finish end of the separator 300 is S5, where 1mm≤S5≤ 3mm. S5 may be the distance between the start end of the negative electrode 100 and the start end of the separator 300, or the distance between the finish end of the negative electrode 100 and the finish end of the separator 300. The distance between the start end of the negative electrode 100 and the start end of the separator 300 is the same as the distance between the finish end of the negative electrode 100 and the finish end of the separator 300.

In this embodiment, the value of S4 may be 2.1mm, 2.3mm, 2.4mm, 2.6mm, 2.7mm, 2.8mm, 3mm, 3.1mm, 3.2mm, 3.3mm, 3.5mm, 3.6mm, 3.7mm, 3.9mm, 4 mm, or other values not specified.

In this embodiment, the value of S5 may be 1.1mm, 1.2mm, 1.5mm, 1.6mm, 1.7mm, 1.8mm, 2mm, 2.1mm, 2.2mm, 2.3mm, 2.4mm, 2.7mm, 2.8mm, 2.9mm, 3 mm, or other values not specified.

In the present embodiment, the values of S4 and S5 may be the same or different, and the present embodiment does not impose any specifically limitation to this.

It will be appreciated that the dimensions of the negative electrode 100 and the separator 300 are reasonably designed, so that while the electrical safety is satisfied, a waste of material due to an oversized separator 300 is avoided, and the processing cost is reduced.

In the above-mentioned embodiments, the description of each embodiment has its own emphasis, and parts not described in detail in a certain embodiment may be referred to the related description of other embodiments.

In the description of this application, the terms "first" and "second" are used for descriptive purposes only and are not to be construed as indicating or implying relative importance or implying the number of indicated technical features. Thus, a feature defined as "first" or "second" may explicitly or implicitly include one or more features.

The above detailed description of the composited laminated core provided by the embodiments of the present invention, and the principles and embodiments of the present invention are described herein using specific examples. The description of the above embodiments is merely intended to assist in understanding the method of the present application and the core concepts thereof. At the same time, variations will occur to those skilled in the art in both the detailed description and the scope of application in accordance with the teachings of the present application. In summary, the present description should not be construed as limiting the application.

## Claims

1. A thermal composite laminated cell comprising:
a negative electrode (100);
a plurality of positive electrodes (200);
a separator (300) comprising a first separator (310) and a second separator (320), the negative electrode (100) being attached to and between the first separator (310) and the second separator (320) to form a composite laminate, the composite laminate comprising a plurality of body portions (330) and a plurality of bending positions (340) arranged alternately and continuously, the bending positions (340) each being provided with a partially cut structure (350), the positive electrodes (200) each being arranged between adjacent body portions (330) in a thickness direction of the negative electrode (100), a projection in the thickness direction of each positive electrode (200) falling completely within a planar area of a corresponding one of the body portions (330).

2. The thermal composite laminated cell according to claim 1, **characterized in that** a length of the negative electrode (100) is at least greater than a length of two of the positive electrodes (200).

3. The thermal composite laminated cell according to claim 1, **characterized in that** the negative electrode (100) comprises a continuous negative current collector (110) and a continuous negative active material layer (120), the negative active material layer (120) being provided on both sides of the negative current collector (110), and one side of the negative active material layer (120) facing away from the negative current collector (110) is attached to the separator (300).

4. The thermal composite laminated cell according to claim 1, **characterized in that** the negative electrode (100) comprises a continuous negative current collector (110) and two negative active material layers (120), both sides of the negative current collector (110) being provided with the negative active material layers (120), a projection of each of the negative active material layers (120) in the thickness direction falling entirely within the planar area of a corresponding one of the body portions (330).

5. The thermal composite laminated cell according to claim 4, **characterized in that** the negative current collector (110) between adjacent negative active material layers (120) is attached to the first separator (310) and the second separator (320).

6. The thermal composite laminated cell according to claim 4, **characterized in that** distances between adjacent negative active material layers are the same in the composite laminate.

7. The thermal composite laminated cell according to claim 4, **characterized in that**, in the composite laminate, a distance between adjacent negative active material layers is L, where 1mm≤L≤3mm; and/or
a thickness of the negative current collector (110) is D1, where 4µm≤D1≤6µm; and/or
a thickness of each negative active material layer is D2, where 50µm≤D2≤ 200µm.

8. The thermal composite laminated cell according to any one of claims 1 to 7, **characterized in that** each of the partially cut structures (350) comprises a plurality of through-holes (351) passing through the separator (300) and the negative electrode (100), the through-holes (351) being arranged at intervals along a width direction of the separator (300).

9. The thermal composite laminated cell according to claim 8, **characterized in that** distances between any two adjacent through-holes are the same; and/or
each of the through-holes (351) has a shape of circle, rectangle, ellipse, hexagon or octagon.

10. The thermal composite laminated cell according to claim 8, **characterized in that** the distance between adjacent through-holes (351) in the width direction of the separator (300) is S 1, wherein 5mm≤S1≤20mm.

11. The thermal composite laminated cell according to claim 8, **characterized in that** each of the through-holes (351) has a first dimension L1 and a second dimension W1, the first dimension L1 being a distance between two parallel planes virtually abutting against two side walls of the through-hole (351) and the second dimension W1 being a distance between two parallel planes virtually abutting against two end walls of the through-hole (351), wherein 1mm≤L1≤20mm, and/or 1mm≤W1≤2mm.

12. The thermal composite laminated cell according to any one of claims 3 to 7, **characterized in that** a length dimension of a portion of the negative electrode (100) on each body portion (330) is larger than a length dimension of a corresponding one of the positive electrodes, and a width dimension of the portion of the negative electrode (100) on the body portion (330) is larger than a width dimension of the corresponding positive electrode.

13. The thermal composite laminated cell according to claim 12, **characterized in that** a distance between a long side of each positive electrode (200) and a long side of a portion of the negative electrode (100) on a corresponding one of the body portions (330) is S2, where 1mm≤S2≤3mm;
and/or, a distance between a wide side of the positive electrode (200) and the corresponding wide side of the portion of the negative active material layer (120) on the corresponding body portion (330) is S3, where 1mm≤S3≤3mm.

14. The thermal composite laminated cell according to any one of claims 1 to 7, **characterized in that** a length dimension of the separator (300) is larger than a length dimension of the negative electrode (100) and a width dimension of the separator (300) is larger than a width dimension of the negative electrode (100).

15. The thermal composite laminated cell according to claim 14, **characterized in that** a distance between a long side of the negative electrode (100) and a long side of the separator (300) is S4, where 2mm≤S4≤4mm; and/or
a distance between a start or finish end of the negative electrode (100) and a start or finish end of the separator (300) is S5, where 1mm≤S5≤3mm.
